# EUROPÄISCHE PATENTANMELDUNG

(11) **EP 4 099 616 A1**
(43) Veröffentlichungstag der Anmeldung: **07.12.2022**
(21) Anmeldenummer: 21198331.7
(22) Anmeldetag: 22.09.2021
(51) Int. Cl.: H04L 9/32, H04W 12/069

(54) **VERFAHREN ZUR INTEGRATION EINER NEUEN KOMPONENTE IN EIN NETZWERK, REGISTRARKOMPONENTE UND ANLAGE**

(30) Priorität: 31.05.2021 DE 102021205549
(71) Anmelder: Siemens Aktiengesellschaft, 80333 München (DE)
(72) Erfinder: Furch, Andreas, 85354 Freising (DE); Pfaff, Oliver, 10587 Berlin (DE)

(57) **Zusammenfassung**

Bei dem Verfahren zur Integration einer neuen Komponente (IOTCOM) in ein Netzwerk (ISN) werden eine neue Komponente (IOTCOM) mit einem Gerätezertifikat (IDEVIDEE) einer Domäne mit einem Domänenwurzelzertifikat (IDEVIDCA) sowie ein Netzwerk mit mindestens einer Bestandskomponente (BOONEI), die ein Bestandsgerätezertifikat der Domäne aufweist, herangezogen und es wird eine mit dem Gerätezertifikat (IDEVIDEE) der Domäne (IDEVIDCA) signierte Anfrage (IMPREQ) der neuen Komponente (IOTCOM) entgegengenommen und die Bestandskomponente (BOONEI) mit dem Bestandsgerätezertifikat wird ermittelt und die Anfrage (IOMPREQ) wird an die Bestandskomponente (BOONEI) übermittelt, wobei das Gerätezertifikat (IDEVIDEE) anhand des Domänenwurzelzertifikats (IDEVIDCA) der Domäne verifiziert wird und wobei mittels der Bestandskomponente (BOONEI) eine mit dem Bestandsgerätezertifikat signierte und mit einem Netzwerkzertifikat (LDEVIDCA) versehene Antwort (IMPRES) bereitgestellt wird, die der neuen Komponente (IOTCOM) übermittelt wird und die neue Komponente (IOTCOM) mittels des Netzwerkzertifikats (LDEVIDCA) in das Netzwerk (ISN) integriert wird.

## Beschreibung

Die Erfindung betrifft ein Verfahren zur Integration einer neuen Komponente mit einem Gerätezertifikat einer Domäne in ein Netzwerk sowie eine Registrarkomponente und eine Anlage.

Die Kommunikation von Internet-der-Dinge-Geräten wird häufig mittels kryptografischen Schlüsseln und zugehörigen Zertifikaten abgesichert. In der Regel werden dazu Schlüsselpaare herangezogen, welche einen privaten Schlüssel und einen öffentlichen Schlüssel umfassen. Solche Schlüsselpaare ermöglichen die verschlüsselte und authentisierte Kommunikation mittels asymmetrischer kryptografischer Verfahren. Der öffentliche Schlüssel eines Schlüsselpaares wird zumeist mittels einer sogenannten Public-Key-Infrastruktur (PKI-Infrastruktur) mit einem Zertifikat mit zuvor sicherzustellender Identitätsinformation authentisch und integritätsgeschützt verbunden. Ein besonderes Zertifikat bildet dabei das selbstsignierte Wurzelzertifikat einer solchen PKI-Infrastruktur. Dieses dient als Vertrauensanker eines solchen Systems von Internet-der-Dinge-Geräten, insbesondere innerhalb einer spezifischen Anlage.

Dieses Wurzelzertifikat muss allen Teilnehmern der PKI-Infrastruktur vertrauenswürdig mitgeteilt werden, damit alle Teilnehmer der PKI-Infrastruktur dem Wurzelzertifikat vertrauen können. Das Einbringen solcher Wurzelzertifikate ist daher ein kritischer Vorgang bei Internet-der-Dinge-Netzwerken, da die Wurzelzertifikate festlegen, ob Internet-der-Dinge-Geräte als authentifiziert betrachtet werden können. Ein Internet-der-Dinge-Gerät benötigt also zur geschützten Kommunikation im Netzwerk ein netzwerkspezifisches Wurzelzertifikat, ein netzwerkspezifisches Endgerätezertifikat sowie zugehörige private Schlüssel.

Ein Internet-der-Dinge-Gerät, dessen Kommunikation mittels einer solchen PKI-Infrastruktur geschützt werden soll, kann grundsätzlich auf viele verschiedene Arten Zertifikate und Schlüssel, im Folgenden auch Berechtigungsnachweise genannt, erhalten. Zur vertrauenswürdigen Einbindung eines Internet-der-Dinge-Geräts in ein Netzwerk ist das Internet-der-Dinge-Gerät mit dem Wurzelzertifikat oder einem im Wurzelzertifikat enthaltenen öffentlichen Schlüssel oder einer eindeutigen und sicheren Referenz auf das Wurzelzertifikat oder einen im Wurzelzertifikat enthaltenen Schlüssel zu versehen, um daraus später die Vertrauenswürdigkeit anderer Internet-der-Dinge-Geräte ableiten zu können. Beim Übertragen des Wurzelzertifikats auf ein solches Internet-der-Dinge-Gerät kommen sogenannte Imprinting-Methoden zum Einsatz, welche einen sicherheitskritischen und folglich risikobehafteten Vorgang bei der Verwaltung von Internet-der-Dinge-Netzwerken mit Internet-der-Dinge-Geräten bilden.

Es ist bekannt, Wurzelzertifikate auf Internet-der-Dinge-Geräte manuell, d. h. händisch, zu übertragen. Dies ist aber bei Internet-der-Dinge-Netzwerken einer bestimmten Größe nur aufwändig und teuer ausführbar. Es ist ferner bekannt, netzwerkspezifische Wurzelzertifikate mittels automatischer Verfahren mit oder ohne organisatorische Sicherheit auf Internet-der-Dinge-Geräte zu übertragen. Dies führt jedoch gegebenenfalls zu Sicherheitsrisiken. Ferner gibt es automatische Verfahren mit Sicherheitsmechanismen, mittels welchen ein solches Imprinting erfolgen kann, etwa das sogenannte Bootstrapping Remote Secure Key Infrastructures (BRSKI) Verfahren. Allerdings erfordern solche automatische Verfahren mit Sicherheitsmechanismen neue Dienste oder Systemkomponenten, etwa herstellerautorisierte Signing Authorities oder weitere Authorities.

Es ist daher Aufgabe der Erfindung, ein verbessertes Verfahren zur Integration von neuen Komponenten in ein Netzwerk zu schaffen. Dabei soll mittels eines solchen neuen Verfahrens insbesondere eine Einbringung von netzwerkspezifischen Wurzelzertifikaten auf die neue Komponente leicht möglich sein. Ferner ist es Aufgabe der Erfindung, eine Registrarkomponente anzugeben, mittels welcher eine Integration einer neuen Komponente in ein Netzwerk effizient, kostengünstig und sicher erfolgen kann. Es ist zudem Aufgabe der Erfindung, eine Anlage mit einem Netzwerk zu schaffen, bei welcher neue Komponenten leicht und kostengünstig und zugleich sicher in das Netzwerk der Anlage integriert werden können.

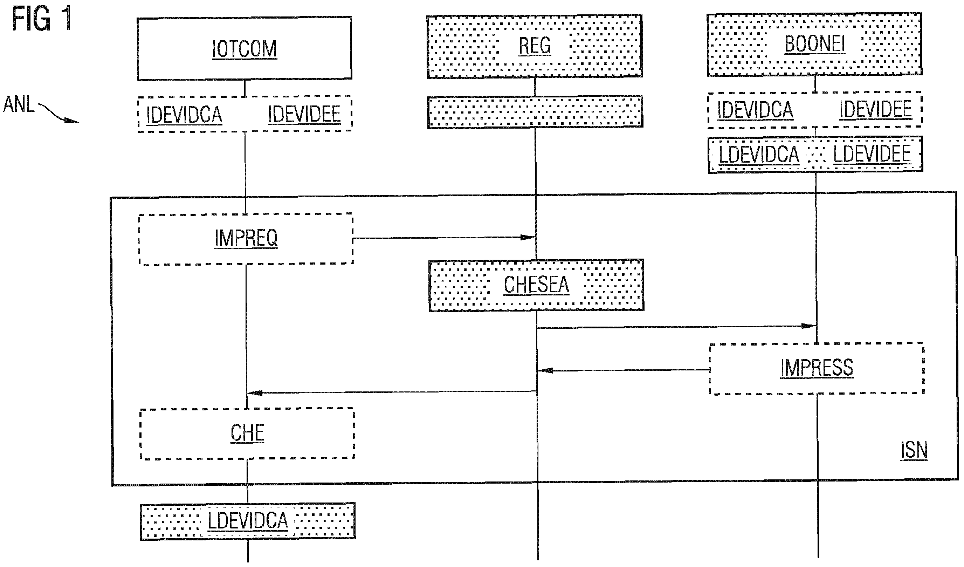

Diese Aufgabe der Erfindung wird mit einem Verfahren zur Integration einer neuen Komponente in ein Netzwerk mit den in Anspruch 1 angegebenen Merkmalen sowie mit einer Registrarkomponente mit den in Anspruch 10 angegebenen Merkmalen und mit einer Anlage mit einem Netzwerk mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Integration einer neuen Komponente in ein Netzwerk wird eine neue Komponente mit einem Gerätezertifikat einer Domäne mit einem Domänenwurzelzertifikat herangezogen. Die Domäne ist vorzugsweise die Herstellerdomäne eines Herstellers der neuen Komponente. Zudem wird bei dem erfindungsgemäßen Verfahren ein Netzwerk herangezogen, das mindestens eine Bestandskomponente umfasst, die ein Bestandsgerätezertifikat der Domäne aufweist. Bei dem erfindungsgemäßen Verfahren wird eine mit dem Gerätezertifikat signierte, d. h. mit einem zum Gerätezertifikat der Domäne gehörenden privaten Schlüssel signierte, Anfrage der neuen Komponente entgegengenommen, vorzugsweise einer Prüfung unterzogen und es wird, vorzugsweise nach erfolgter Prüfung, die Bestandskomponente mit dem Bestandsgerätezertifikat ermittelt. Bei dem erfindungsgemäßen Verfahren wird die Anfrage an die Bestandskomponente übermittelt, wobei das Gerätezertifikat anhand des Domänenwurzelzertifikats der Domäne verifiziert wird und wobei mittels der Bestandskomponente eine mit dem Bestandsgerätezertifikat signierte, d. h. mit einem zum Bestandsgerätezertifikat korrespondierenden privaten Schlüssel signierte, und mit einem Netzwerkzertifikat, vorzugsweise einem Wurzelzertifikat des Netzwerks, versehene Antwort bereitgestellt wird, die der neuen Komponente übermittelt wird. Mittels des Netzwerkzertifikats wird die neue Komponente in das Netzwerk integriert.

Vorzugsweise fungiert eine Herstellerdomäne der neuen Komponente als Domäne, welche eine vertrauenswürdige Beziehung zwischen neuer Komponente und Bestandskomponente herstellt. Über diese vertrauenswürdige Beziehung kann dann vertrauenswürdig ein Netzwerkzertifikat, insbesondere ein Wurzelzertifikat des Netzwerks, übermittelt werden.

Besonders bevorzugt weist die mindestens eine Bestandskomponente sowohl das Gerätezertifikat der Domäne als auch das Netzwerkzertifikat des Netzwerks auf. Die Bestandskomponente kann also in dieser Weiterbildung der Erfindung sowohl mit dem Netzwerkzertifikat, d. h. mit einem zum Netzwerkzertifikat gehörenden privaten Schlüssel, signieren als auch mit dem Bestandsgerätezertifikat, d. h. mit einem zum Bestandsgerätezertifikat gehörenden privaten Schlüssel, signieren.

Es versteht sich, dass die Wendung "mit einem Zertifikat signiert" im Rahmen der vorliegenden Erfindung stets "mit einem zum Zertifikat gehörenden privaten Schlüssel signiert" meint. An die Stelle des Zertifikats kann in dieser Wendung insbesondere das Gerätezertifikat oder das Bestandsgerätezertifikat oder das Netzwerkzertifikat treten.

Auf diese Weise kann zwischen der neuen Komponente und einer Bestandskomponente des Netzwerks aufgrund des Gerätezertifikats und des Bestandsgerätezertifikats derselben Domäne eine authentifizierte signierte Nachricht mit dem Netzwerkzertifikat, vorzugsweise dem Wurzelzertifikat des Netzwerks, an die neue Komponente übermittelt werden. Aufgrund der Verifizierung mittels des Domänenwurzelzertifikats der gemeinsamen Domäne der neuen Komponente und der Bestandskomponente können zwischen Bestandskomponente und der neuen Komponente authentifizierte Nachrichten übermittelt werden, die eine manipulationssichere Übermittlung des Netzwerkzertifikats an die neue Komponente erlauben. Weiterhin kann eine solche Übermittlung insbesondere auf Basis einer weiteren Anfragesicherung auf Basis des Wurzelzertifikats des Netzwerks, insbesondere durch einen ausgezeichneten Registrar, der über die Aufnahme der neuen Komponente in die Bestandsdomäne entscheidet, erfolgen. Folglich kann der neuen Komponente das Netzwerkzertifikat, üblicherweise das Wurzelzertifikat des Netzwerks, auf sichere und authentifizierte Weise übertragen werden, sodass ein Imprinting eines Netzwerkzertifikats auf die neue Komponente automatisiert, kostengünstig, effizient und sicher möglich ist.

Mittels des erfindungsgemäßen Verfahrens lassen sich folglich neue Komponenten in ein Netzwerk, insbesondere ein Netzwerk einer Anlage, integrieren, etwa in der Art von Notfallersatzteilen, ohne dass dazu ein manuelles Zutun oder besondere, speziell ausgestaltete, Zusatzdienste erforderlich sind. Insbesondere kann die Integration neuer Komponenten folglich ohne spezielle menschliche Handlungen erfolgen, sodass eine Zero-Touch-Integration neuer Komponenten mittels des erfindungsgemäßen Verfahrens automatisiert durchführbar ist. Die Voraussetzung, ein Netzwerk mit einer Bestandskomponente mit dem Bestandsgerätezertifikat der Domäne sowie eine neue Komponente mit einem Gerätezertifikat der gleichen Domäne heranzuziehen, ist leicht erfüllbar, da die Domäne des Gerätezertifikats und des Bestandsgerätezertifikats regelmäßig etwa durch einen Hersteller von neuer Komponente und Bestandskomponente festgelegt wird, sodass mittels einer Komponentenverwaltung von Komponenten des Netzwerks und neuen Komponenten sowie entsprechender Herstellerwahl die Voraussetzung zur Ausführung des erfindungsgemäßen Verfahrens, also das Vorliegen eines gemeinsamen Domänenwurzelzertifikats, leicht erfüllbar ist.

Unter der Wendung, gemäß welcher im Rahmen der vorliegenden Anmeldung ein Gerätezertifikat anhand des Domänenwurzelzertifikats der Domäne verifiziert wird, ist zu verstehen, dass das Gerätezertifikat anhand des Domänenwurzelzertifikats validiert wird, gegebenenfalls noch unter Einbeziehung dazwischen liegender weiterer Zertifikate, die eine Hierarchie der PKI-Infrastruktur abbilden. D. h. die Validität des Gerätezertifikats wird anhand des Domänenwurzelzertifikats verifiziert.

Bevorzugt ist bei dem erfindungsgemäßen Verfahren das Netzwerkzertifikat nicht identisch mit dem Bestandsgerätezertifikat der Domäne. In dieser Weiterbildung des erfindungsgemäßen Verfahrens wird die gemeinsame Domäne der neuen Komponente und der Bestandskomponente als vertrauensbildendes Hilfsmittel herangezogen, um das eigentliche Netzwerkzertifikat vertrauenswürdig zu übertragen.

Vorzugsweise ist das Netzwerkzertifikat ein Wurzelzertifikat des Netzwerks. In dieser Weiterbildung der Erfindung lässt sich eine Vertrauensbeziehung der neuen Komponente mit weiteren oder sämtlichen Bestandskomponenten des Netzwerks leicht etablieren.

Vorzugsweise ist bei dem erfindungsgemäßen Verfahren das Domänenwurzelzertifikat ein Wurzelzertifikat des Gerätezertifikats und des Bestandsgerätezertifikats. Infolge des gemeinsamen Wurzelzertifikats des Gerätezertifikats und des Bestandsgerätezertifikats kann das Gerätezertifikat anhand des dem Bestandsgerätezertifikat bekannten Domänenwurzelzertifikats leicht verifiziert werden. Vorzugsweise wird die Information über das Domänenwurzelzertifikat aus dem Bestandsgerätezertifikat bezogen oder abgeleitet oder mittels des Bestandsgerätezertifikats gewonnen. Unter einem Wurzelzertifikat des Gerätezertifikats und des Bestandsgerätezertifikats wird im Rahmen der vorliegenden Anmeldung insbesondere ein Wurzelzertifikat verstanden, auf welches das Gerätezertifikat und das Bestandsgerätezertifikat verweisen. Idealerweise sind Gerätezertifikat und Bestandsgerätezertifikat vom Gerätewurzelzertifikat signiert.

Zweckmäßig wird das erfindungsgemäße Verfahren mittels einer Registrarkomponente ausgeführt. Dabei ist die Registrarkomponente vorzugsweise grundsätzlich Teil des Netzwerks, in welches die neue Komponente integriert werden soll.. Dies ist allerdings nicht notwendigerweise erforderlich. Es ist zudemnicht erforderlich, dass die neue Komponente mit der Registrarkomponente selbst eine vertrauenswürdige Kommunikationsbeziehung unterhält. Vielmehr kann mittels der vertrauenswürdigen Kommunikationsbeziehung zwischen der neuer Komponente und der Bestandskomponente infolge der gemeinsamen Domäne von Gerätezertifikat und Bestandsgerätezertifikat eine vertrauenswürdige Beziehung aufgebaut werden. In dieser Weiterbildung des erfindungsgemäßen Verfahrens vermittelt die Registrarkomponente lediglich die vertrauenswürdige Kommunikationsbeziehung zwischen neuer Komponente und Bestandskomponente. Zweckmäßig besteht zwischen der Registrarkomponente und der Bestandsgerätekomponente ebenfalls eine Vertrauensbeziehung, sodass die Registrarkomponente die Antwort der Bestandskomponente mit dem Netzwerkzertifikat an die neue Komponente, bevorzugt wiederum nach Prüfung, übermittelt.

In einer vorteilhaften Weiterbildung des erfindungsgemäßen Verfahrens ist das Netzwerk ein Teil einer Anlage in Form einer Fertigungsanlage oder einer Bearbeitungsanlage oder eines Fahrzeugs oder einer Maschine. Gerade in solchen Anlagen sind Zero-Touch-Lösungen zur Integration von neuen Komponenten in ein Netzwerk besonders häufig gefordert und erlauben eine flexible und unaufwändige Verbindung einer Vielzahl von Komponenten des Netzwerks.

Bevorzugt ist bei dem erfindungsgemäßen Verfahren das Netzwerk ein Internet-der-Dinge-Netzwerk. Gerade bei Internet-der-Dinge-Netzwerken stellt sich das Problem einer Integration neuer Komponenten regelmäßig. In diesem Fall bietet das erfindungsgemäße Verfahren zur Integration einer neuen Komponente in ein Netzwerk einen besonders großen Kostenvorteil. Zweckmäßig sind bei dem erfindungsgemäßen Verfahren Gerätezertifikat und Bestandsgerätezertifikat und Netzwerkzertifikate jeweils Zertifikate, die einen öffentlichen Schlüssel eines asymmetrischen kryptografischen Schlüsselpaars aufweisen. In dieser Weiterbildung des erfindungsgemäßen Verfahrens kann die Authentifizierung mittels Zertifikaten in an sich bekannter und etablierter Weise erfolgen.

Die erfindungsgemäße Registrarkomponente ist ausgebildet zur Ausführung eines erfindungsgemäßen Verfahrens zur Integration einer neuen Komponente in ein Netzwerk wie vorhergehend beschrieben. Die erfindungsgemäße Registrarkomponente ist eingerichtet zur Integration einer neuen Komponente mit einem Gerätezertifikat einer Domäne mit einem Domänenwurzelzertifikat in ein Netzwerk mit mindestens einer Bestandskomponente des Netzwerks, wobei die Bestandskomponente ein Bestandsgerätezertifikat der Domäne aufweist, wobei die Registrarkomponente eingerichtet zum Empfang, und vorzugsweise auch zur Prüfung, einer mit dem Gerätezertifikat der Domäne signierten Anfrage der neuen Komponente und zur Ermittlung der Bestandskomponente mit dem Bestandsgerätezertifikat sowie zur Übermittlung der Anfrage der Komponente an die Bestandskomponente ist. Ferner ist die erfindungsgemäße Registrarkomponente zum Empfang, und vorzugsweise zudem zur Prüfung, einer mit dem Bestandsgerätezertifikat signierten und mit einem Netzwerkzertifikat, vorzugsweise dem Wurzelzertifikat der neuen Domäne, versehenen Antwort der Bestandskomponente und zur Übermittlung der Antwort an die neue Komponente eingerichtet. Auf diese Weise ist die Registrarkomponente zur Ausführung aller Verfahrensschritte des erfindungsgemäßen Verfahrens ausgebildet.

In einer vorteilhaften Weiterbildung der Erfindung ist die Registrarkomponente ausgebildet, das Gerätezertifikat der neuen Komponente anhand des Domänenwurzelzertifikats zu verifizieren.

Vorzugsweise ist die erfindungsgemäße Registrarkomponente ein Internet-der-Dinge-Gerät.

Die erfindungsgemäße Anlage weist ein Netzwerk, insbesondere ein Internet-der-Dinge-Netzwerk sowie eine erfindungsgemäße Registrarkomponente auf. Bei dem Netzwerk der erfindungsgemäßen Anlage können folglich neue Komponenten besonders einfach integriert werden.

Nachfolgend wird die Erfindung anhand eines in der Zeichnung dargestellten Ausführungsbeispiels näher erläutert. Die einzige Zeichnungsfigur 1 zeigt die Durchführung des erfindungsgemäßen Verfahrens mittels einer erfindungsgemäßen Registrarkomponente einer erfindungsgemäßen Anlage mit einem Internet-der-Dinge-Netzwerk schematisch in einer Prinzipskizze.

Die erfindungsgemäße Anlage ANL weist ein Internet-der-Dinge-Netzwerk ISN und eine Registrarkomponente REG auf. Das Internet-der-Dinge-Netzwerk ISN umfasst Internet-der-Dinge-Geräte, beispielsweise das dargestellte Internet-der-Dinge-Gerät BOONEI, welche mittels Ethernet miteinander verbunden sind und welche in der Lage sind, mit anderen, benachbarten Internet-der-Dinge-Geräten über dieses Ethernet zu kommunizieren. Eine neue Internet-der-Dinge-Komponente IOTCOM ist noch nicht Bestandteil des Internet-der-Dinge-Netzwerks ISN.

Die neue Internet-der-Dinge-Komponente IOTCOM ist herstellerseitig mit einem asymmetrischen kryptographischen Schlüsselpaar versehen, wobei der öffentliche Schlüssel durch ein X.509-Zertifikat in die Vertrauensdomäne des Herstellers der Internet-der-Dinge-Komponente IOTCOM aufgenommen ist. Das heißt, die Internet-der-Dinge-Komponente IOTCOM weist ein Gerätezertifikat einer Herstellerdomäne auf. Eine mittels eines privaten Schlüssels des asymmetrischen kryptografischen Schlüsselpaars der Internet-der-Dinge-Komponente IOTCOM erfolgte Signatur kann auf Basis einer Zertifikatskettenvalidierung mittels eines Wurzelzertifikats IDEVIDCA des Herstellers der Internet-der-Dinge-Komponente IOTCOM geprüft werden. Das Wurzelzertifikat des Herstellers IDEVIDCA ist der Registrarkomponente REG bereits infolge einer zuvor in das Internet-der-Dinge-Netzwerk ISN integrierten Bestandskomponente in Form des Internet-der-Dinge-Geräts BOONEI bekannt. Die Registrarkomponente REG hält folglich das Wurzelzertifikat des Hersteller IDEVIDCA integritätsgeschützt in einem Speicher vor.

Die Registrarkomponente REG ist eine zentrale Verwaltungskomponente des Internet-der-Dinge-Netzwerks ISN, ist aber im gezeigten Ausführungsbeispiel nicht Teil des Internet-der-Dinge-Netzwerks ISN, kann aber in weiteren, nicht eigens dargestellten Ausführungsbeispielen durchaus Teil des Internet-der-Dinge-Netzwerks ISN sein. Die Registrarkomponente REG verfügt über ein Anlagenwurzelzertifikat LDEVIDCA, welches als Anlagenwurzelzertifikat der Anlage ANL zugleich als Netzwerkzertifikat des Internet-der-Dinge-Netzwerks ISN dient. Die neue Komponente IOTCOM, welche noch nicht Bestandteil des Internet-der-Dinge-Netzwerks ISN ist, soll nun in das Internet-der-Dinge-Netzwerk ISN integriert werden. Dazu initialisiert sich die neue Internet-der-Dinge-Komponente IOTCOM zunächst netzwerksspezifisch und schickt dann eine Imprint-Anfrage IMPREQ an die Registrarkomponente REG. Die Internet-der-Dinge-Komponente IOTCOM signiert ihre Imprint-Anfrage IMPREQ mit einem Endgerätezertifikat IDEVIDEE unter Heranziehung eines privaten Schlüssels des kryptografischen Schlüsselpaars der Internet-der-Dinge-Komponente IOTCOM. Die Registrarkomponente REG prüft die Imprint-Anfrage IMPREQ anhand der Zertifikatskette und unter Rückgriff auf ihr bekannte Plandaten des Internet-der-Dinge-Netzwerks ISN der Anlage ANL, in welches die neue Internet-der-Dinge-Komponente IOTCOM integriert werden möchte. Die Prüfung anhand der Zertifikatskette ist der Registrarkomponente REG dadurch möglich, dass sie das zum Endgerätezertifikat IDEVIDEE zugehörige Wurzelzertifikat des Geräteherstellers IDEVIDCA bereits kennt. Anhand des Gerätezertifikats IDEVIDEE ermittelt die Registrarkomponente REG das Wurzelzertifikat IDEVIDCA und ermittelt im Internet-der-Dinge-Netzwerk ISN dasjenige Internet-der-Dinge-Gerät BOONEI, welches ein Bestandsgerätezertifikat aufweist, welches auf dasselbe Wurzelzertifikat IDEVIDCA des Geräteherstellers verweist wie das Gerätezertifikat IDEVIDEE der Internet-der-Dinge-Komponente IOTCOM. Die Registrarkomponente REG ermittelt folglich das Internet-der-Dinge-Gerät BOONEI als Bestandkomponente derselben Herstellerdomäne mittels des Ermittlungsvorgangs CHESEA und übermittelt dem Internet-der-Dinge-Gerät BOONEI die Imprint-Anfrage IMPREQ der Internet-der-Dinge-Komponente IOTCOM. Der Ermittlungsvorgang CHESEA ist der Registrarkomponente REG leicht möglich, da die Registrarkomponente REG eine zentrale Verwaltungskomponente des Internet-der-Dinge-Netzwerks ISN bildet und die Bestandsgerätezertifikate von Internet-der-Dinge-Geräten des Internet-der-Dinge-Netzwerks ISN detailliert kennt. Die Weiterleitung der Imprint-Anfrage IMPREQ erfolgt durch eine zwischen dem Internet-der-Dinge-Gerät BOONEI und der Registrarkomponente REG etablierte Sicherheitsbeziehung, etwa auf Basis der anlagenspezifischen Schlüssel und Zertifikate, die kryptographisch geschützt ist. Die Registrarkomponente REG fordert das Internet-der-Dinge-Gerät BOONEI auf, eine Imprint-Antwort IMPRES zu erstellen und zu signieren. Das Internet-der-Dinge-Gerät BOONEI erstellt die Imprint-Antwort IMPRES und signiert die Imprint-Antwort IMPRES mit seinem Bestandsgerätezertifikat IDEVIDEE gehörenden privaten Schlüssel. Das Internet-der-Dinge-Gerät BOONEI integriert in die Imprint-Antwort IMPRES das durch dieses Internet-der-Dinge-Gerät BOONEI integritätsgeschützt gespeicherte und vorher vertrauenswürdig übermittelte anlagenspezifische Wurzelzertifikat LDEVIDCA. Das Internet-der-Dinge-Gerät BOONEI übermittelt seine Imprint-Antwort IMPRES an die Registrarkomponente REG innerhalb der etablierten Sicherheitsbeziehung. Die Registrarkomponente REG prüft die Imprint-Antwort IMPRES im Bedarfsfall und sendet die Imprint-Antwort IMPRES als Teil einer neuen Imprint-Antwort an die Internet-der-Dinge-Komponente IOTCOM.

Die Internet-der-Dinge-Komponente IOTCOM kann die Imprint-Antwort IMPRES anhand einer Zertifikatskettenvalidierung unter Nutzung des eigenen Wurzelzertifikats IDEVIDCA des Geräteherstellers mit einem Prüfschritt CHE prüfen. Da das Internet-der-Dinge-Gerät BOONEI in der gleichen Herstellerdomäne des Geräteherstellers befindlich ist, gelingt die Signaturprüfung durch die Internet-der-Dinge-Komponente IOTCOM und das in der Nachricht enthaltene Anlagenzertifikat LDEVIDCA wird von der neuen Internet-der-Dinge-Komponente IOTCOM als vertrauenswürdig anerkannt und in einem integritätsgeschützten Speicher abgelegt.

Die neue Internet-der-Dinge-Komponente IOTCOM kann nach dem vertrauenswürdig empfangenen Wurzelzertifikat LDEVIDCA dieses anlagenspezifische Wurzelzertifikat nutzen, um eine neue Sicherheitsbeziehung zur Registrarkomponente REG aufzubauen. Innerhalb einer solchen neuen Sicherheitsbeziehung zur Registrarkomponente REG kann etwa ein anlagenspezifisches Gerätezertifikat LDEVIDEE für die neue Internet-der-Dinge-Komponente IOTCOM ausgerollt werden.

Zwischen der Imprint-Anfrage IMPREQ und der Imprint-Antwort IMPRES akzeptiert die neue Internet-der-Dinge-Komponente IOTCOM keine andere Nachricht.

Für den Fall, dass die Registrarkomponente REG keine Bestandskomponente mit einem Bestandskomponentenzertifikat der Herstellerdomäne findet, also die neue Internet-der-Dinge-Komponente IOTCOM nicht durch Bestandskomponenten des Internet-der-Dinge-Netzwerks ISN als vertrauenswürdig authentifiziert und verifiziert werden kann, findet eine Ausnahmeprozedur statt. In dieser Ausnahmeprozedur können anlagenspezifische Wurzelzertifikate LDEVIDCA nach eventuell händischer Prüfung von IOTCOM in einer organisatorisch geschützten Umgebung eingebracht werden.

In einem weiteren, nicht eigens dargestellten Ausführungsbeispiel ist es möglich, dass die Kommunikationsbeziehung zwischen der neuen Internet-der-Dinge-Komponente IOTCOM und der Registrarkomponente REG, die für die Imprint-Anfrage IMPREQ genutzt wird, vorläufig als vertrauenswürdig akzeptiert wird. Innerhalb einer solchen vorläufigen Vertrauensbeziehung akzeptiert die neue Internet-der-Dinge-Komponente IOTCOM eine beidseitig authentifizierte Kommunikation, welche aufgrund eines fehlenden Wurzelzertifikats LDEVIDCA auf Seiten der neuen Internet-der-Dinge-Komponente IOTCOM nicht endgültig validiert werden kann, zunächst nur vorläufig und entscheidet nach Abarbeitung der Imprint-Antwort IMPRES, ob diese Sicherheitsbeziehung weiterhin aufrechterhalten wird oder aber zurückgerollt werden muss. Für diese Entscheidung wird das in der Imprint-Antwort IMPRES enthaltene anlagenspezifische Wurzelzertifikat LDEVIDCA herangezogen. In dieser Weiterbildung der Erfindung kann der neuen Internet-der-Dinge-Komponente IOTCOM keine alte oder nicht von der eigentlichen Registrarkomponente REG übermittelte Imprint-Antwort IMPRES untergeschoben werden. In weiteren, nicht eigens dargestellten Ausführungsbeispielen, werden in den verschiedenen Imprint-Anfragen IMPREQ und in der Imprint-Antwort IMPRES Nonces verwendet, um jeweils einzigartige Imprint-Anfragen und Imprint-Antworten zu erreichen.

## Patentansprüche

1. Verfahren zur Integration einer neuen Komponente (IOTCOM) in ein Netzwerk (ISN), wobei eine neue Komponente (IOTCOM) mit einem Gerätezertifikat (IDEVIDEE) einer Domäne mit einem Domänenwurzelzertifikat (IDEVIDCA) sowie ein Netzwerk mit mindestens einer Bestandskomponente (BOONEI), die ein Bestandsgerätezertifikat der Domäne aufweist, herangezogen werden und bei welchem eine mit dem Gerätezertifikat (IDEVIDEE) der Domäne (IDEVIDCA) signierte Anfrage (IMPREQ) der neuen Komponente (IOTCOM) entgegengenommen wird und die Bestandskomponente (BOONEI) mit dem Bestandsgerätezertifikat ermittelt wird und die Anfrage (IOMPREQ) an die Bestandskomponente (BOONEI) übermittelt wird, wobei das Gerätezertifikat (IDEVIDEE) anhand des Domänenwurzelzertifikats (IDEVIDCA) der Domäne verifiziert wird und wobei mittels der Bestandskomponente (BOONEI) eine mit dem Bestandsgerätezertifikat signierte und mit einem Netzwerkzertifikat (LDEVIDCA) versehene Antwort (IMPRES) bereitgestellt wird, die der neuen Komponente (IOTCOM) übermittelt wird und die neue Komponente (IOTCOM) mittels des Netzwerkzertifikats (LDEVIDCA) in das Netzwerk (ISN) integriert wird.

2. Verfahren nach dem vorhergehenden Anspruch, bei welchem das Netzwerkzertifikat (LDEVIDCA) ein Wurzelzertifikat des Netzwerks (ISN) ist.

3. Verfahren nach einem der vorhergehenden Ansprüche, bei welchem das Domänenwurzelzertifikat ein Wurzelzertifikat des Gerätezertifikats (IDEVIDEE) und des Bestandsgerätezertifikats ist.

4. Verfahren nach einem der vorhergehenden Ansprüche, welches mittels einer Registrarkomponente (REG) ausgeführt wird.

5. Verfahren nach einem der vorhergehenden Ansprüche, bei welchem die Registrarkomponente (REG) nicht Teil des Netzwerks (ISN) ist un3 vorzugsweise zur Kommunikation mit Komponenten des Netzwerks (ISN) ausgebildet und eingerichtet ist.

6. Verfahren nach einem der vorhergehenden Ansprüche, bei welchem die Registrarkomponente (REG) eine Vertrauensbeziehung mit der Bestandkomponente (BOONEI) unterhält.

7. Verfahren nach einem der vorhergehenden Ansprüche, bei welchem das Netzwerk (ISN) ein Teil einer Anlage (ANL) in Form einer Fertigungsanlage oder einer Bearbeitungsanlage oder eines Fahrzeugs oder einer Maschine ist.

8. Verfahren nach einem der vorhergehenden Ansprüche, bei welchem das Netzwerk (ISN) ein Internet-der-Dinge-Netzwerk ist.

9. Verfahren nach einem der vorhergehenden Ansprüche, bei welchem Gerätezertifikat (IDEVIDEE) und Bestandsgerätezertifikat und Netzwerkzertifikat (LDEVIDCA) jeweils Zertifikate sind, die einen öffentlichen Schlüsselteil eines asymmetrischen kryptographischen Schlüsselpaares aufweisen.

10. Registrarkomponente, ausgebildet zur Ausführung eines Verfahrens nach einem der vorhergehenden Ansprüche, und eingerichtet zur Integration einer neuen Komponente (IOTCOM) mit einem Gerätezertifikat (IDEVIDEE) einer Domäne mit einem Domänenwurzelzertifikat (IDEVIDCA) in ein Netzwerk (ISN) mit mindestens einer Bestandskomponente (BOONEI) mit einem Bestandsgerätezertifikat der Domäne, - welche zum Empfang einer mit dem Gerätezertifikat (IDEVIDEE) der Domäne signierten Anfrage (IMPREQ) der Komponente (IOTCOM) und zur Ermittlung der Bestandskomponente (BOONEI) mit dem Bestandsgerätezertifikat sowie zur Übermittlung der Anfrage (IMPREQ) der Komponente (IOTCOM) an die Bestandskomponente (BOONEI) eingerichtet ist, und welche zum Empfang einer mit dem Bestandsgerätezertifikat signierten und mit einem Netzwerkzertifikat (LDEVIDCA) versehenen Antwort der Bestandkomponente (BOONEI) und zur Übermittlung der Antwort an die neue Komponente (IOTCOM) eingerichtet ist.

11. Registrarkomponente nach dem vorhergehenden Anspruch, welche ausgebildet ist, das Gerätezertifikat (IDVIDEE) der neuen Komponente (IOTCOM) anhand des Domänenwurzelzertifikats (IDEVIDCA) zu verifizieren.

12. Registrarkomponente nach einem der vorhergehenden Ansprüche, welche ein Internet-der-Dinge-Gerät ist.

13. Anlage mit einem Netzwerk (ISN), insbesondere einem Internet-der-Dinge-Netzwerk, und mit einer Registrarkomponente (REG) nach dem vorhergehenden Anspruch.
